Europäisches Patentamt

European Patent Office

Office européen des brevets

(19)

(11) Veröffentlichungsnummer : **0 364 668 B1**

(12)

# EUROPÄISCHE PATENTSCHRIFT

(45) Veröffentlichungstag der Patentschrift :
13.01.93 Patentblatt 93/02

(51) Int. Cl.⁵ : **C04B 28/26**

(21) Anmeldenummer : **89111624.6**

(22) Anmeldetag : **26.06.89**

(54) **Anorganischer Baustoff and dessen Verwendung.**

(30) Priorität : **23.09.88 DE 3832452**

(43) Veröffentlichungstag der Anmeldung :
**25.04.90 Patentblatt 90/17**

(45) Bekanntmachung des Hinweises auf die
Patenterteilung :
**13.01.93 Patentblatt 93/02**

(84) Benannte Vertragsstaaten :
**AT CH DE FR GB LI NL**

(56) Entgegenhaltungen :
**EP-A- 0 100 848
EP-A- 0 324 968
WO-A-81/01283
GB-A- 1 207 331
US-A- 4 328 034
CHEMICAL ABSTRACTS, Band 93, Nr 24, Dezember 1980, Columbus, Ohio, USA, Seite 263,
Zusammenfassung 224786u**

(73) Patentinhaber : **Mansfeld, Lothar
Todtglüsinger Strasse 30
W-2117 Tostedt (DE)**
Patentinhaber : **Kock, Heinz
Hasenböge 238
W-2059 Klein Pampau (DE)**

(72) Erfinder : **Mansfeld, Lothar
Todtglüsinger Strasse 30
W-2117 Tostedt (DE)**
Erfinder : **Kock, Heinz
Hasenböge 238
W-2059 Klein Pampau (DE)**

(74) Vertreter : **Glawe, Delfs, Moll & Partner
Patentanwälte
Liebherrstrasse 20
W-8000 München 26 (DE)**

## Beschreibung

Die Erfindung betrifft einen erhärtenden, anorganischen Baustoff auf der Basis von Flugasche und Wasserglas sowie die Verwendung desselben.

Es ist ein Wasserglasmörtel bekannt (offenkundige Vorbenutzung), der Steinkohlenflugasche, Silica fume, sogenanntes Polymerwasserglas und gegebenenfalls Magerungsstoffe enthält. Er hat den Nachteil von Ausblühneigung und mangelnder Dauerfestigkeit bei Wassereinwirkung und schlechter Erhärtung bei Wassereinwirkung. Ferner ist es bei einem andere Ausgangsstoffe enthaltenden Wasserglasmörtel bekannt, die Ausblühneigung durch Zugabe bestimmter Borsalze sowie von Kalziumsulfat, -phosphat, -nitrat sowie Alkalifluorsilikaten zu vermindern; jedoch sind diese Zusätze nicht in allen Anwendungsfällen befriedigend (DE-OS 27 45 750).

Die EP-PS 0 148 280 offenbart einen Wasserglasmörtel auf der Basis von Asche, wie sie bei industriellen Hochtemperatur-Schmelzprozessen als Staub anfällt und vornehmlich Siliziumoxid und Aluminiumoxid enthält. Die Masse soll ferner gelöstes $SiO_2$ enthalten, das beispielsweise aus Disperspulverförmiger, wasserhaltiger Kieselsäure stammt. Es können Magerungs- und Schäummittel zugesetzt werden, letzteres vornehmlich als Kombination von Natriumperborat und Aluminiumpulver. Dieser Baustoff hat den Nachteil, daß die Masse wegen der Bindung nicht unbeträchtlicher Wassermengen an das $SiO_2$ einen erheblichen Wassergehalt aufweist und nur unter äußerer Wärmezufuhr rasch und hinreichend abhärtet, was insbesondere bei der Herstellung poriger Baustoffe hinderlich ist und die Fertigung poriger Baukörper am Einbauort praktisch ausschließt. Die Wasserbeständigkeit ist unbefriedigend. Ähnlichen Offenbarungsinhalt hat die EP-PS 0 153 097, die auf die Bildung von Alumino-Silikat als Steinkomponente abzielt. Schaumbildung wird nicht erwogen. Als Asche wird vornehmlich gemahlene Frischofenschlacke empfohlen. Die Nachteile sind dieselben. - Die DE-OS 36 22 568 empfiehlt einen Zement-Quellmörtel, dessen Festigkeitseigenschaften durch einen Zusatz einer Wasserglas-Flugasche-Mischung verbessert werden sollen. Die Ausblühneigung, die Aushärtegeschwindigkeit eines Wasserglasmörtels sowie Schaumbildung spielen dabei keine Rolle. - Die DE-PS 33 03 409 empfiehlt für die Herstellung eines massereichen Formkörpers hoher Festigkeit (Maschinenfundament) einen Wasserglas-Asche-Mörtel, der unter äußerer Wärmezufuhr gehärtet wird. Beständigkeit unter Wassereinfluß, Schäumbarkeit und rasche Erhärtung ohne äußere Wärmezufuhr lassen sich hier nicht entnehmen. Dasselbe gilt für die DE-OS 37 40 349 sowie für die EP-OS 0 199 941, die als Asche Flugasche aus Steinkohle-Kraftwerken empfiehlt.

Der Erfindung liegt die Aufgabe zugrunde, einen Baustoff auf der Basis von Flugasche und Wasserglas zu schaffen, der hinsichtlich der Beständigkeit unter Wassereinfluß, der Schäumbarkeit und/oder der Erhärtung besondere Vorteile aufweist und eine vielseitige Anwendbarkeit ermöglicht. Die erfindungsgemäße Lösung besteht darin, daß der Baustoff einen Gehalt an Kalziumaluminat und/oder Kalziumaluminatsilikat aufweist, nämlich einen Gehalt *von mindestens 1 Gew.-% (bezogen auf den Aschegehalt) an Kalziumaluminat und/oder Kalziumaluminatsilikat. Es handelt sich um* die Stoffe aus der folgenden Gruppe:

Monokalziumaluminat $CaO.Al_2O_3$
Dikalziumaluminat $CaO.(Al_2O_3)_2$
Trikalziumaluminat $(CaO)_3.Al_2O_3$
Dikalziumaluminatsilikat $(CaO)_2.Al_2O_3.SiO_2$

Zwar ist Kalziumaluminat als Zementbildner in Baustoffen bekannt (DE-OS 29 24 356), nicht aber das erfindungsgemäße Zusammenwirken mit Wasserglas zur Verbesserung der Wasserbeständigkeit von Wasserglasmörtel und zur Verminderung von dessen Ausblühneigung.

Die aufgezählten Stoffe, die im folgenden auch vereinfachend als Ausblühverhinderer bezeichnet werden, werden insgesamt vorzugsweise in einer Menge bis zu 15 Gew.-% (weiter vorzugsweise 10%, vorzugsweise in der Größenordnung von 5%) bezogen auf den Aschegehalt zugegeben. Die Mindestmenge liegt bei 1 Gew.-% und sollte vorzugsweise 3 Gew.-% nicht unterschreiten. Als Asche wird vorzugsweise Flugasche aus Steinkohlekraftwerken - gegebenenfalls auch Braunkohlekraftwerken - eingesetzt.

Hauptsächlich sollen Mono- und/oder Dikalziumaluminatverbindungen als Zusatzstoff verwendet werden, während die übrigen lediglich als Nebenbestandteile auftreten sollen. Sie können jedoch ausnahmsweise auch alleine oder überwiegend verwendet werden.

Die erfindungsgemäßen Zusatzstoffe vermeiden die Empfindlichkeit gegenüber Wasser und wäßrigen Lösungen und Verdünnungen, ermöglichen die Erhärtung unter Wasser und reduzieren die Ausscheidung wasserlöslicher Verbindungen aus dem Baustoff.

Zweckmäßigerweise hat der Baustoff auch einen Gehalt an sehr feinteiligem Siliziumdioxid, vorzugsweise in der Form von Silica fume mit einer spezifischen Oberfläche bis zu ca 30 m²g. Die spezifische Oberfläche sollte nicht extrem groß (über 50 m²g) sein, damit keine sehr großen Wassermengen gebunden werden. Auch braucht das Siliziumoxid nicht in Wasser lösbar zu sein. Der erforderliche Wassergehalt kann dadurch gegenüber dem Stand der Technik bei gleicher Verarbeitbarkeit erheblich gesekt werden, wodurch die Schwindung und die Ausblühuneigung weiter verringert werden und die Hitzebeständigkeit verbessert wird. Ferner können Magerungsmittel enthalten sein. Dafür kommen je nach Verwendungszweck und gewünschter Feste und Dichte vornehmlich die folgenden in Frage: Sande und Kiese aus natürlichen Vorkommen; Hohl- und Vollglaskörper (Granulate); Hohl- und Vollkunststoffkörper (Granulate), Blähton, Blähschiefer oder blähfähige (insbesondere glasige) Mineralstoffe; Gummi- oder Elastomergranulate, Festpolyurethan, Styrol-Blähstoffe; Fasern aus Glas, Kunststoffen oder Mineralstoffen; hitzebeständige Zuschläge wie Schamotte. Zur Festigkeitserhöhung können anorganische und organische Fasern herangezogen werden.

Dem Baustoff können ferner sonstige bekannte Additive beigegeben werden, beispielsweise Plastifizierungsmittel, Entschäumer, Thixotropierungsstoffe, Metalloxide und organische oder anorganische Pigmente.

Wesentliche Anwendungsbereiche sind hochfeste, chemikalien- und hitzebeständige Mörtel und Estriche, die streich-, spritz- und spachtelfähig sind und manuell und/oder maschinell verarbeitet werden. Sie eignen sich als Fugen- und Mauermörtel, vorzugsweise im Bereich des Sielbaues, für Beschichtungen und Bekleidungen im Sammler- und Leitungsbau, für verschleißfeste Bodenbeläge sowie Auskleidungen und Beschichtungen von Anlagen, Rohrleitungen und Behältern, auch im Agrar- und Viehhaltungsbereich, wie z. B. von Futtersilos und -trögen sowie Spaltenböden.

In Hinblick auf seine hohe Hitzefestigkeit eignet sich der erfindungsgemäße Baustoff im Zusammenhang mit Schwer- und Schwerstzuschlägen (beispielsweise Baryt, Magnetit, Ilmemit) auch als Abschirmstoff gegenüber energiereicher Strahlung, beispielsweise im Kernreaktor.

Die hohe Haftfestigkeit und Temperaturbeständigkeit des Materials läßt es besonders geeignet erscheinen als Isolierstoff und Brandschutzbeschichtung, zur Erhöhung des Feuerwiderstands auf Stahlkonstruktionen oder anderen zu schützenden Bauteilen. Die Einsatzmöglichkeiten sind mit Spritzasbest zu vergleichen, jedoch weist das erfindungsgemäße Material bessere Eigenschaften hinsichtlich Festigkeit, Dauerbeständigkeit, Säurebeständigkeit, Hitzebeständigkeit und (im geschäumten Zustand) Wärmedämmung auf.

Der Mörtel eignet sich insbesondere auch zur Herstellung von Baukörpern am Ort, weil die Aushärtung bei Umgebungstemperatur ohne besondere Aushärtungsapparate bzw. Wärmezufuhr erfolgen kann.

Besonders hohe Bedeutung im Zusammenhang der Erfindung hat die Herstellung geschäumter Baukörper, für die gleichfalls der Vorteil gilt, das sie ohne besondere Aushärtungsapparate bei Umgebungstemperatur an Ort und Stelle hergestellt werden können. Zwar eignen sich zur Schaumbildung verschiedene bekannte Treibmittel, beispielsweise Aluminiumpulver oder Kalziumcarbid. Besonders bevorzugt wird jedoch die Verwendung von Ferrosilizium. Bei der Gasbildung entsteht hochaktives Siliziumdioxid, das rasch mit den übrigen in der Mischung vorhandenen Oxiden und mit dem Wasserglas reagiert und trotz geringen Wassergehalts eine dichte, homogene Steinbildung innerhalb des Mörtels ermöglicht. Ferner hat Ferrosilizium den Vorteil, daß die Gasbildung verzögert einsetzt, so daß hinreichende Verarbeitungszeit verbleibt. Die Verzögerung kann leicht in weiten Grenzen, von praktisch sofort bis zu mehreren Stunden, eingestellt werden, nämlich durch Wahl einer geeigneten Kornfeinheit und des Alterungsgrades, der (wahrscheinlich durch die Dicke der Oxidschichten an der Partikeloberfläche) Einfluß auf die Zeitspanne vor Beginn der Gasbildung hat.

Besonders vorteilhaft ist die Kombination von Ferrosilizium mit den erwähnten Aluminaten, weil diese Kombination zu einer sehr raschen Aushärtung unmittelbar im Anschluß an die Porenbildung führt. Verbunden ist dies mit einem exothermen Prozeß, der durch Temperaturerhöhung die Aushärtung gleichfalls begünstigt. Nach Abschluß der Porenbildung erhärtet der Baukörper unabhängig von der Zeitdauer der Porenbildung und der vorausgehenden Ruhezeit sozusagen spontan und ist dadurch sehr bald belastbar.

Die Verarbeitung kann nach konventionellen Methoden erfolgen. Bevorzugt wird die Spritztechnik. Da das Material rasch abbindet, kann es im allgemeinen nicht fabrikmäßig gemischt und nach dem Transport zur Baustelle verwendet werden. Da aber zumindest die Komponenten der Grundmörtelmischung exakt dosiert werden sollten, ist es zweckmäßig, diese vorgemischt anzuliefern und die Mischung mit dem Wasserglas und gegebenenfalls den Zuschlägen und sonstigen Trockenkomponenten am Verwendungsort zu mischen, und zwar wegen der steifen Konsistenz zweckmäßigerweise mittels eines Zwangsmischers. Bei Anwendung des Trockenspritzverfahrens findet die Mischung wie üblich im Spritzvorgang (dynamischer Mischer) statt. Im Falle des Naßspritzverfahrens werden die Komponenten unmittelbar zuvor gemischt.

Der erfindungsgemäße Leichtbaustoff besitzt vor allem die folgenden Vorteile:
- hohe Festigkeitseigenschaften bezogen auf das Raumgewicht
- gute Schall- und Wärmedämmeigenschaften
- geringe Restfeuchte des porösen Feststoffs
- gute Schäumbarkeit
- Möglichkeit der Verarbeitung vor Ort ohne Einsatz von anlagetechnischen Behandlungsgeräten und -verfahren (beispielsweise Wärmekammern)
- hohe Hitzebeständigkeit und Feuerwiderstand
- hohe Hitzeschockbeständigkeit

- hohe Haftfestigkeit (Abreißfestigkeit) am Untergrund
- hohe Säurebeständigkeit
- hohe Anfangsfestigkeit

Es ist zwar bekannt, daß Wasserglasmörtel eine hohe Beständigkeit gegenüber Säurebeanspruchung besitzen. Da aber die erfindungsgemäßen Zusatzstoffe gegenüber vielen Säuren nicht beständig sind, hätte man erwarten müssen, daß durch die erfindungsgemäße Maßnahme die Säurefestigkeit zurückgeht. Überraschenderweise ist dies nicht der Fall. Die Erfindung bezieht sich daher insbesondere auch auf den Einsatz des erfindungsgemäßen Baustoffs unter Säurebeanspruchung.

Neu ist die Beständigkeit des Baustoffs gegenüber Wassereinfluß. Er eignet sich daher auch für den Einfluß von gegebenenfalls toxischen Substanzen selbst dann, wenn Feuchtigkeitseinfluß (beispielsweise auf nicht hinreichend dicht abgedeckter Deponien) nicht ausgeschlossen werden kann. Ferner hat die Erfindung den Vorteil, daß als Füll- und Magerungsstoffe auch solche Aschen zur Herstellung von Baukörpern herangezogen werden können, die bedenkliche Bestandteile (beispielsweise Schwermetalle) enthalten und deshalb sonst für Bauzwecke nicht verwendbar sind.

Als Ferrosilizium eignen sich die handelsüblichen Qualitäten mit 10 - 90, vorzugsweise 55 - 85 Gew.-% Si-Gehalt. Als Wasserglas eignet sich vornehmlich ein sogenanntes Polymerwasserglas, wie es beispielsweise unter der Bezeichnung "Kleenodense 145K/1145KN" von der Fa. Akzo Chemie Neederlande BV auf den Markt gebracht wird und bei einer Dichte von 1,49 g/cm$^3$ eine Viskosität von 62 mPa.s und einen pH-Wert von etwa 13 aufweist.

Unter Verwendung dieses Wasserglases setzt sich die Ausgangs-Mörtelzusammensetzung vorteilhafterweise folgendermaßen zusammen:

61 Gew.-% Steinkohlenflugasche
12 Gew.-% Silica fume
24 Gew.-% Polymerwasserglas
3 Gew.-% Ausblühverhinderer.

Bei Verwendung anderer Wasserglas- oder Flugaschequalitäten kann das zweckmäßige Verhältnis dieser beiden maßgebenden Komponenten durch Versuch leicht neu ermittelt werden.

Dem Mörtel können als Anreger der Festigkeitsentwicklung bis zu 10 Gew.-% Portlandzement (bezogen auf den Flugaschegehalt) beigegeben werden.

Die erfindungsgemäßen Baustoffmassen können in Formen oder Schalungen fabrikmäßig oder an Ort und Stelle zu Baukörpern verarbeitet werden. Stahl- und Kunststoffarmierung ist möglich. Die Festigkeit kann durch Faserbewehrung beeinflußt werden. Auf Untergründe kann die Masse geschäumt oder ungeschäumt durch Spachtel-, Streich-, Roll- und Spritztechnik aufgetragen werden. Schon dünner Auftrag von anschließend aufschäumender Masse auf vorhandene Bauwerksoberflächen führt zu wirksamem Brandschutz und kann beispielsweise herkömmliche Asbestbeschichtung ersetzen.

Das Material kann in Hohlräume oder Hohlkörper geschäumt oder ungeschäumt oder erst später aufschäumend eingebracht werden.

Bei einem besonderen Verfahren zur Herstellung von Baukörpern wird zunächst in die Baukörperbegrenzung (beispielsweise Schalung) eine Schüttung von beispielsweise Kies - oder im Falle von Leichtbaukörpernhaufwerksporösen Schüttmaterialien eingebracht. Danach wird der erfindungsgemäße, ein Treibmittel enthaltende aber noch nicht getriebene Mörtel im unteren Bereich eingebracht (beispielsweise eingespritzt). Sobald die Gasbildung einsetzt, steigt der Mörtel, dessen Viskosität geeignet eingestellt wurde und durch die Gasbildung vermindert ist, durch die Schüttungszwischenräume hoch und füllt diese schließlich unter Bildung eines geschlossenen, festen Baukörpers aus. Die Fließfähigkeit kann für dieses Verfahren durch Auswahl der Zusammensetzung, insbesondere auch der Magerungsmittel, geeignet eingestellt werden.

Beispiel 1:

Aus einer Ausgangs-Mörtelzusammensetzung von:

63 Gew.-% Flugasche
12 Gew.-% Silica fume
25 Gew.-% Polymerwasserglas

wurde durch Zusatz von 5% einer Mischung von Mono- und Dikalziumaluminat mit geringen Bestandteilen von Trikalziumaluminat, Dikalziumaluminatsilikat, Dikalziumsilikat und/oder Kalziumsulfat (bezogen auf Flugasche = 100%) die erfindungsgemäße Mörtelzusammensetzung erhalten. Im Gegensatz zu dem aus der Ausgangs-Mörtelzusammensetzung hergestellten Baustoffen erwiesen sich die erfindungsgemäßen Baustoffe als ausblühfest, wasser- und säurebeständig.

Beispiel 2:

Die Rezeptur
37 Gew. -Teile der erfindungsgemäßen Mörtelzusammensetzung gemäß Beispiel 1
37 Gew. -Teile Quarzsand 0 bis 1 mm
33 Gew. -Teile Quarzsand 1 bis 3 mm

ergab einen Mörtel mit dichtem Gefüge, hohem Widerstand gegen Säurebeanspruchung und Temperatureinwirkungen über 250° bis 500°C. Der Mörtel ließ sich konventionell sowie durch Spritztechnik verarbeiten. Er konnte zur Erhöhung des Abnutzungswiderstands auch mit Hartstoffzuschlägen (Korund) hergestellt werden.

Gebrauchseigenschaften im Alter von 28 Tagen:

Druckfestigkeit: ca. 70 N/mm$^2$

Biegezugfestigkeit: ca. 15 N/mm$^2$

Haftung auf trockenem und

feuchtem Betonuntergrund

- Abreißfestigkeit: > 3 N/mm$^2$

Haftung auf Stahl

- Abreißfestigkeit: > 3 N/mm$^2$

Temperaturbeständigkeit: > 250 – 500°C

Verbund zwischen Stahl und Mörtel: bis ca. 500°C.

Die Beständigkeit und der Stahl-Mörtel-Verbund bei hoher Temperatur ist vom jeweiligen Temperaturverhalten des Zuschlags abhängig und kann sich daher ändern bei Verwendung anderer Zuschläge.

Beispiel 3:

Rezeptur:
50 Gew. -Teile der erfindungsgemäßen Mörtelzusammensetzung gemäß Beispiel 1
15 Gew. -Teile Schamotte 0 bis 1 mm
35 Gew. -Teile Schamotte 1 bis 3 mm.

Es ergab sich ein Mörtel und Beschichtungsmaterial mit hohem Widerstand gegen Säurebeanspruchung und Temperatureinwirkungen oberhalb 500 bis mindestens 1000°C. Er ließ sich konventionell sowie durch Spritztechnik verarbeiten. Alternative Magerungsmittel: Perlite, Blähton, Blähschiefer und ähnliche hitzebeständige Stoffe.

Gebrauchseigenschaften im Alter von 28 Tagen:

Druckfestigkeit: > 50 N/mm$^2$

Biegezugfestigkeit: > 10 N/mm$^2$

Haftung auf trockenem und

feuchtem Betonuntergrund

- Abreißfestigkeit: > 3 N/mm$^2$

Haftung auf Stahl

- Abreißfestigkeit: > 3 N/mm$^2$

| Temperaturbeständigkeit: | mindestens bis 1000°C |
| Schock-Temperaturbeständigkeit: | mindestens bis 1000°C, bei Abschrecken unter Wasser. |
| Verbund zwischen Stahl und Mörtel: | über 500°C |

Beispiel 4:

Rezeptur:

| | |
|---|---|
| Steinkohlenflugasche | 420 g |
| Silica fume | 80 g |
| Ausblühverhinderer | 25 g |
| Polymerwasserglas | 167 g |
| Abmagerungsstoff - Schamotte | 300 g |
| Aufschäumer - Ferrosilizium-Pulver | 35 g |

Die Ruhezeit vor Beginn der Gasbildung kann durch die Art des Ferrosiliziumpulvers zwischen etwa 5 Min. und 3,5 Stunden gesteuert werden. Die Erhärtung zur Endfestigkeit erfolgt sehr rasch unter Wärmeentwitklung nach Beendigung des Porenbildungsprozesses. Die Masse läßt sich sowohl fabrikmäßig in Formen als auch an Ort und Stelle verarbeiten. Es können stahl- und kunststoffarmierte Baukörper daraus hergestellt werden. Die Festigkeit kann ferner durch Faserzusatz zur Masse beeinflußt werden. Ferner eignet sich die Masse zur Herstellung von Leichtgranalien durch Verwendung üblicher Granulierverfahren oder durch Extrudieren des noch ungeschäumten Ausgangsmaterials. Wenn die Granalien Schadstoffe (z.B Schwermetalle) enthalten, kann das Granulat einen weiteren dichten Überzug aus ungeschäumten Wasserglasmörtel erhalten. Abstreuen der frisch überzogenen Partikeln mit mineralischen Feinstoffen vermeidet das Zusammenkleben und verbessert die Bindefähigkeit bei ihrer Verwendung als Zuschlag bei der Herstellung von hydraulisch erhärtenden Baustoffen.

Verarbeitung: konventionell, jedoch vorzugsweise durch Spritztechnik.

Als Mägerungsmittel kommen in Abhängigkeit von der angestrebten Temperaturbeständigkeit quarzitisches Material oder gleichwertige Mineralstoffe bis ca. 500°C; Schamotte, Perlite, Blähton, Blähschiefer oder andere geeignete Leichtzuschläge bis 1000°C und darüber infrage.

Statt Ferrosilizium können die anderen genannte oder bekannten Treibmittel oder Schäume zur Porenbildung verwendet werden.

Gegenüber dem Beispiel 3 erfährt der Baustoff durch die Wirkung des Treibmittels eine Volumenvermehrung auf 250 Vol.-% und mehr.

Gebrauchseigenschaften:
Die Druck- und Biegezugfestigkeiten sowie die Haftung am Untergrund sind im Vergleich mit bekannten Mörteln spezifisch hoch. Im einzelnen richten sich die Werte nach dem Grad der Porosität und/oder den Eigenschaften der jeweils verwendeten Magerungsmittel und Zuschläge. Nach den genannten Kriterien hergestellte Baustoffe mit einer Temperaturbeständigkeit bis mindestens 1000°C erweisen sich auch als schocktemperaturbeständig bei Abschrecken unter Wasser.

**Patentansprüche**

1. Erhärtender, anorganischer Baustoff auf der Basis von Asche und Wasserglas, gekennzeichnet durch einen Gehalt von mindestens 1 Gew.-% (bezogen auf den Aschegehalt) an Kalziumaluminat und/oder Kalziumaluminatsilikat.

2. Baustoff nach Anspruch 1, gekennzeichnet durch einen Gehalt an feinteiligem Siliziumdioxid wie Silica fume.

3. Baustoff nach Anspruch 1 oder 2, gekennzeichnet durch ein Magerungsmittel.

**4.** Baustoff nach einem der Ansprüche 1 bis 3, dadurch gekennzeichnet, daß er einen Schaumbildner bzw. Poren enthält.

**5.** Baustoff nach Anspruch 4, dadurch gekennzeichnet, daß der Schaumbildner Ferrosilizium, Kalziumsilizium oder Magnesiumsilizium ist.

**6.** Baustoff nach einem der Ansprüchen 1 bis 3, dadurch gekennzeichnet, daß er eine Trockenrohdichte von mehr als 2,80 kg/dm³ aufweist.

**7.** Baustoff nach einem der Ansprüche 1 bis 6, dadurch gekennzeichnet, daß der Gehalt an Kalziumaluminat und/oder Kalziumaluminatsilikat mindestens 3 Gew.-% bezogen auf den Aschegehalt beträgt.

**8.** Baustoff nach einem der Ansprüche 1 bis 7, dadurch gekennzeichnet, daß der Gehalt an Kalziumaluminat und/oder Kalziumaluminatsilikat höchstens 15%, vorzugsweise nicht mehr als 10%, beträgt.

**9.** Verwendung des Baustoffes nach einem der Ansprüche 1 bis 8 unter Säurebeanspruchung.

**10.** Verfahren zum Herstellen eines Baukörpers unter Verwendung eines Baustoffs auf der Basis von Wasserglas nach einem der Ansprüche 1 bis 8, dadurch gekennzeichnet, daß die Flugasche, das feinteilige Siliziumdioxid, der Stoff aus der Gruppe Kalziumaluminat und/oder Kalziumaluminatsilikat sowie gegebenenfalls ein Porenbildner vorgemischt angeliefert und an der Baustelle mit dem Wasserglas gemischt werden.

**11.** Verfahren nach Anspruch 10, dadurch gekennzeichnet, daß der Porenbildner Ferrosilizium ist.

**12.** Verfahren nach Anspruch 10 oder 11, dadurch gekennzeichnet, daß die Mischung der Trockenkomponenten mit dem Wasserglas im Zusammenhang mit einem Naßspritzverfahren bzw. im Trockenspritzverfahren durchgeführt wird.

**13.** Verfahren nach einem der Ansprüche 10 bis 12, dadurch gekennzeichnet, daß man den Baustoff ohne äußere Wärmezufuhr erhärten läßt.

**14.** Verfahren zur Herstellung eines Baukörpers, dadurch gekennzeichnet, daß die Partikelzwischenräume einer Schrittung, die sich innerhalb einer Formbegrenzung befindet, von dem Baustoff nach Anspruch 4 oder 5 unter Porenbildung nachträglich durchsetzt werden und dieser anschließend unter Bindung der Partikeln erhärtet.

## Claims

**1.** A hardening inorganic building material with an ash and water-glass basis, characterised by having a content of at least 1 % by weight (in relation to the ash content) of calcium aluminate and/or calcium aluminate silicate.

**2.** A building material according to Claim 1, characterised by a content of finely divided silicon dioxide, such as silica fume.

**3.** A building material according to Claim 1 or 2, characterised in that it contains a leaning agent.

**4.** A building material according to any one of Claims 1 to 3, characterised in that it contains a foaming agent and/or pores.

**5.** A building material according to Claim 4, characterised in that the foaming agent is ferrosilicon, calcium silicon or magnesium silicon.

**6.** A building material according to any one of Claims 1 to 3, characterised in that it has a dry mass density of more than 2.80 kg/dm³.

**7.** A building material according to any one of Claims 1 to 6, characterised in that the content of calcium aluminate and/or calcium aluminate silicate is at least 3 % by weight in relation to the ash content.

8. A building material according to any one of Claims 1 to 7, characterised in that the content of calcium aluminate and/or calcium aluminate silicate is at most 15 %, preferably not more than 10 %.

9. Use of the building material according to any one of Claims 1 to 8 under acid application.

10. A method of fabricating a structure using a building material based on water-glass according to any one of Claims 1 to 8, characterised in that the fly ash, the finely divided silicon dioxide, the material from the group comprising calcium aluminate and/or calcium aluminate silicate, as well as optionally a pore-forming agent, are supplied premixed and are mixed with the water-glass at the building site.

11. A method according to Claim 10, characterised in that the pore-forming agent is ferrosilicon.

12. A method according to Claim 10 or 11, characterised in that the mixing of the dry components with the water-glass is carried out in connection with a wet-spraying process or using a dry-spraying process.

13. A method according to any one of Claims 10 to 12, characterised in that the building material is allowed to harden without external heat supply.

14. A method of fabricating a structure, characterised in that the particle interspaces of a fill, which is disposed within a mould boundary, are additionally permeated by the building material according to Claim 4 or 5, with the formation of pores, and it subsequently hardens with bonding of the particles.


**Revendications**

1. Matériau de construction inorganique durcissant à base de cendres et de verre soluble, caractérisé en ce qu'il a une teneur (rapportée à la teneur en cendre) d'au moins 1 % en poids d'aluminate de calcium et/ou d'aluminosilicate de calcium.

2. Matériau de construction selon la revendication 1, caractérisé en ce qu'il a une teneur en particules fines de dioxyde de silicium tel que la fumée de silice.

3. Matériau de construction selon la revendication 1 ou 2, caractérisé en ce qu'il contient une matière amaigrissante.

4. Matériau de construction selon l'une quelconque des revendications 1 à 3, caractérisé en ce qu'il contient un agent moussant des pores.

5. Matériau de construction selon la revendication 4, caractérisé en ce que l'agent moussant est du ferrosilicium, du calcium-silicium ou du magnésium-silicium.

6. Matériau de construction selon l'une quelconque des revendications 1 à 3, caractérisé en ce qu'il a une masse volumique apparente à sec supérieure à 2,80 Kg/dm$^3$.

7. Matériau de construction selon l'une quelconque des revendications 1 à 6, caractérisé en ce que la teneur en aluminate de calcium et/ou en aluminosilicate de calcium rapportée à la teneur en cendre est d'au moins 3 % en poids.

8. Matériau de construction selon l'une quelconque des revendications 1 à 7, caractérisé en ce que la teneur en aluminate de calcium et/ou en aluminosilicate de calcium est au plus de 15 %, de préférence non supérieure à 10 %.

9. Utilisation en ambiance acide du matériau de construction selon l'une quelconque des revendications 1 à 8.

10. Procédé pour la réalisation d'un élément de construction en utilisant un matériau de construction à base de verre soluble selon l'une quelconque des revendications 1 à 8, caractérisé en ce que la cendre volante, le dioxyde de silicium en particules fines, la matière de la famille de l'aluminate de calcium et/ou de l'aluminosilicate de calcium, ainsi que le cas échéant un agent porogène, sont livrés prémélangés, et mélangés sur le chantier avec le verre soluble.

**11.** Procédé selon la revendication 10, caractérisé en ce que l'agent porogène est du ferrosilicium.

**12.** Procédé selon la revendication 10 ou 11, caractérisé en ce que le mélange des composants secs avec le verre soluble est effectué en liaison avec un procédé de pulvérisation humide ou un procédé de pulvérisation à sec.

**13.** Procédé selon l'une quelconque des revendications 10 à 12, caractérisé en ce que l'on laisse durcir le matériau de construction sans apport de chaleur extérieure.

**14.** Procédé pour la réalisation d'un élément de construction, caractérisé en ce que les vides entre les particules d'un remplissage se trouvant dans une délimitation de forme sont comblés ultérieurement, grâce à la formation de pores dans le matériau de construction selon la revendication 4 ou 5, lequel durcit ensuite par liaison des particules.